# EUROPÄISCHE PATENTSCHRIFT

(11) **EP 4 110 557 B1**
(45) Veröffentlichungstag und Bekanntmachung des Hinweises auf die Patenterteilung: **06.11.2024**
(21) Anmeldenummer: 20848952.6
(22) Anmeldetag: 14.12.2020
(51) Int. Cl.: B25J 9/16

(54) **ANORDNUNG FÜR DIE BESTÜCKUNG UND VERDRAHTUNG ELEKTRONISCHER KOMPONENTEN IM SCHALTANLAGENBAU SOWIE EIN ENTSPRECHENDES VERFAHREN**
ARRANGEMENT FOR FITTING AND WIRING ELECTRONIC COMPONENTS IN SWITCHGEAR ENGINEERING, AND CORRESPONDING METHOD
ENSEMBLE POUR IMPLANTER ET CÂBLER DES COMPOSANTS ÉLECTRONIQUES DANS LA RÉALISATION D'INSTALLATIONS DE COMMUTATION ET PROCÉDÉ CORRESPONDANT

(30) Priorität: 28.02.2020 DE 102020105317
(43) Veröffentlichungstag der Anmeldung: 04.01.2023
(73) Patentinhaber: Rittal GmbH & Co. KG, 35745 Herborn (DE)
(72) Erfinder: ABRASS, Ahmad, 65620 Waldbrunn (DE); BAECHLER, Andreas Michael, 35708 Haiger (DE)
(74) Vertreter: Angerhausen, Christoph
(86) Internationale Anmeldenummer: PCT/DE2020/101058
(87) Internationale Veröffentlichungsnummer: WO 2021/170163

(56) Entgegenhaltungen:
- WO-A1-2019/146007
- US-A1- 2006 033 713
- US-A1- 2015 158 176
- US-A1- 2017 320 213
- US-A1- 2018 108 458
- US-A1- 2020 016 759

## Beschreibung

Die Erfindung geht aus von einer Anordnung für die Bestückung und Verdrahtung elektronischer Komponenten im Schaltanlagenbau, wobei die Anordnung einen Roboter mit einem als Greifer ausgebildeten Endeffektor, eine Montageplattenhaltevorrichtung, mit der eine Montageplatte in Bezug auf den Roboter in einer Montageposition gehalten ist, und eine Komponentenzufuhr im Zugriffsbereich des Roboters, über die auf der Montageplatte zu montierende Komponenten für die Abnahme durch den Roboter bereitgestellt sind, aufweist, wobei eine Steuerung des Roboters Maschinendaten zur Ansteuerung des Roboters einschließlich Positionsdaten für die Anordnung von Komponenten auf einer Montageebene einer zu bestückenden Montageplatte aufweist, wobei der Roboter ein optisches Abbildungssystem aufweist, das dazu eingerichtet ist, eine Ausrichtung einer Montageplatte in Bezug auf den Roboter zu erfassen, wobei die Steuerung des Roboters dazu eingerichtet ist, abhängig von der erfassten Ausrichtung die Positionsdaten mit einem die Ausrichtung der Montageplatte in Bezug auf den Roboter repräsentierenden Offset zu versehen. Eine derartige Anordnung ist aus der US 2015/0158176 A1 bekannt. Ähnliche Anordnungen zeigen auch die US 2014/0277732 A1, die EP 0 924 818 A2 die DE 44 31254 A1, die US 2017/0320213 A1 und die US 2020/016759 A1.

Die aus dem Stand der Technik bekannten Anordnungen haben den Nachteil, dass insbesondere die Montageplatte in Bezug auf den Roboter, welcher beispielsweise als ein Knickarmroboter ausgebildet sein kann, hochpräzise angeordnet werden muss, mit Fehlertoleranzen, die im Submillimeterbereich liegen, um eine zuverlässige Anordnung der Komponenten und die Verdrahtung dieser mit Verdrahtungskomponenten wie Kabeln und dergleichen zu ermöglichen. Trotz aller Kalibrierungsbemühungen, um die Montageplatte in Bezug auf den Roboter hochpräzise anzuordnen, besteht bei Prozessschritten, die vom Roboter ausgeführt werden und höchste Präzision erfordern, etwa das Zuführen eines Kabelenden, beispielsweise einer Aderendhülse einer Kontaktierungsstelle einer Komponente, immer noch das Problem, dass häufig nachjustiert werden muss bzw. dass derartige Schritte nur durch manuelle Intervention umgesetzt werden können. Gerade für diese manuell aufwändigen Bearbeitungsschritte bei der Erstellung von elektrischen Schaltanlagen besteht ein entsprechend hoher Bedarf, auch diese automatisiert durchführen zu können.

Es ist daher die Aufgabe der Erfindung, eine Anordnung der zuvor beschriebenen Art derart weiterzuentwickeln, dass sie auch die Durchführung eine hohe Präzision erfordernde Bearbeitungsschritte bei der Erstellung einer elektrischen Schaltanlage auf einer Montageplatte automatisierbar macht.

Diese Aufgabe wird durch eine Anordnung mit den Merkmalen des Anspruchs 1 gelöst.

Der nebengeordnete Anspruch 12 betrifft ein entsprechendes Verfahren. Beispielhafte Ausführungsformen sind Gegenstand der jeweils abhängigen Ansprüche.

Demgemäß ist bei einer Anordnung vorgesehen, dass der Roboter ein optisches Abbildungssystem aufweist, das dazu eingerichtet ist, eine Ausrichtung einer Montageplatte in Bezug auf den Roboter zu erfassen, wobei die Steuerung des Roboters dazu eingerichtet ist, abhängig von der erfassten Ausrichtung die Positionsdaten mit einem die Ausrichtung der Montageplatte in Bezug auf den Roboter repräsentierenden Offset zu versehen.

Dabei wird mit dem optischen Abbildungssystem, welches beispielsweise eine bildgebende Kamera oder dergleichen aufweist, eine Ausrichtung der Montageplatte in Bezug auf den Roboter erfasst.. Zugleich kann eine Abweichung der tatsächlichen Anordnung der Montageplatte in Bezug auf eine Referenzausrichtung der Montageplatte erfasst werden. Die jeweils erfasste Abweichung kann dann dazu herangezogen werden, einen Offset zu berechnen, mit welchem die Positionsdaten für die Anordnung der Komponenten in weiteren Bearbeitungsschritten beaufschlagt werden.

Die Idee der Erfindung beruht somit darauf, anstelle des Versuchs, die Montageplatte hochpräzise in Bezug auf den Roboter anzuordnen, eine weitestgehend beliebige Anordnung der Montageplatte oder eine gewisse Abweichung der Anordnung der Montageplatte von einer Sollanordnung der Montageplatte zuzulassen, diese Anordnung der Montageplatte zu erfassen, aus der erfassten Anordnung bzw. einer Abweichung einen Offset zu berechnen und diesen bei der weiteren Bearbeitung der Montageplatte insoweit zu berücksichtigen, als die Positionsdaten der Komponenten bzw. die Bearbeitungsschritte mit dem Offset beaufschlagt werden.

Die Maschinendaten für die Ansteuerung des Roboters können von der Steuerung unmittelbar aus 3D-CAD-Daten eines computergestützten Systems für das Engineering einer elektrischen Schaltanlage abgeleitet werden. Diese 3D-CAD-Daten können beispielsweise einen elektrischen Schaltplan, ein Bohrlochbild für die Bearbeitung der Montageplatte, einen Verdrahtungsplan und dergleichen aufweisen. Die Daten können beispielsweise ein Layout aufweisen, entsprechend welches Komponenten auf der Montageebene anzuordnen, Kabel/Drähte auf der Montageebene zu verlegen und Ausbrüche in die Montageplatte einzubringen sind. Da diese 3D-CAD-Daten zunächst unabhängig von dem Bearbeitungssystem erzeugt werden, mithilfe welches die geplante Schaltanlage auf der Montageplatte erzeugt werden soll, weisen die 3D-CAD-Daten keine Maschinendaten für die Ansteuerung des Roboters auf und ebenso folglich auch keine Sollposition des Bearbeitungsroboters in Bezug auf die Montageplatte.

Das Abbildungssystem weist eine Stereokamera mit zwei unter einem spitzen Winkel zueinander angeordneten Einzelkameras, die im Schnittbereich ihrer Bildebenen einen dreidimensionalen Abbildungsbereich erzeugen. Der Abbildungsbereich liegt im Bereich des distalen Endes des Greifer des Endeffektors, um eine präzise Abbildung beispielsweise einer im Greifer fixierten Komponente und deren exakte Ausrichtung in Bezug auf den Greifer zu erfassen. Das optische Abbildungssystem weist somit eine Stereokamera auf, deren beide optische Achsen unter einem spitzen Winkel zu dem Greifer angeordnet sind.

Der Greifer kann zwei parallel zueinander ausgerichtete Greiferfinger aufweisen, die senkrecht zueinander verstellbar sind, wobei die beiden optischen Achsen und die beiden Längsachsen der beiden Greiferfinger in derselben Ebene oder in zwei parallelen Ebenen liegen. Ein geeigneter Greifer ist beispielsweise in der DE 10 2019 106 710 A1 beschrieben. Der Greifer zeichnet sich gerade dadurch aus, dass die beiden Greiferfinger parallel zueinander angeordnet und senkrecht zueinander verstellbar sind. Dazu sind die beiden Greiferfinger über eine Linearstelleinheit zueinander verstellbar.

Das optische Abbildungssystem kann für die Bestimmung der Ausrichtung der Montageplatte in Bezug auf den Roboter dazu eingerichtet sein, ein 2-oder 3-dimensionales Bild der ein Bohrlochbild aufweisenden Montageebene der Montageplatte aufzunehmen und das aufgenommene Lochbild durch eine Transformation, vorzugsweise eine Koordinatentransformation, in ein in den Maschinendaten hinterlegtes Referenzlochbild der Montageplatte zu überführen, wobei durch die Transformation der Offset bestimmt ist.

Das optische Abbildungssystem kann eine Komponentenerkennung aufweisen, die dazu eingerichtet ist, eine an der Komponentenzufuhr bereitgestellte oder auf der Montageplatte montierte Komponente anhand ihrer mit dem optischen Abbildungssystem aufgenommenen geometrischen Abmessungen und durch Abgleich dieser mit in einem Speicher der Steuerung hinterlegten Referenzabmessungen, die einer bestimmten Komponente oder einem bestimmten Komponententyp zugeordnet sind, zu identifizieren.

Die Komponentenerkennung kann dabei dazu eingerichtet sein, für eine erkannte Komponente die erkannte Komponente betreffende physische Komponentendaten aus einer Datenbank zu beziehen und aus den Komponentendaten Positionsdaten für mindestens eine Kontaktierstelle der die physischen Komponentendaten betreffenden Komponente zu ermitteln. Die von der Komponentenerkennung bezogenen physischen Komponentendaten können auch auf die genannten Kontaktierstellen beschränkt sein, sodass von der Komponentenerkennung keine Datenextraktionsarbeit zu erbringen ist.

Die Steuerung kann dazu eingerichtet sein, die Positionsdaten der mindestens einen Kontaktierstelle mit in den Maschinendaten hinterlegten Sollvorgaben für die Positionsdaten der mindestens einen Kontaktierstelle abzugleichen und bei einer ermittelten Abweichung die Maschinendaten mit einem die Abweichung kompensieren Offset zu versehen.

Ein distales Greiferende liegt im Abbildungsbereich des optischen Abbildungssystems, wobei das optische Abbildungssystem dazu eingerichtet ist, eine Ausrichtung eines Kabelendes, vorzugsweise eine Aderendhülse des Kabelendes, in Bezug auf den Greifer zu ermitteln.

Die Steuerung kann weiterhin dazu eingerichtet sein, in Kenntnis der Ausrichtung des Kabelendes in Bezug auf den Greifer eine Zuführrichtung des Kabelendes zu einer Kontaktierstelle einer zu verdrahtenden Komponente zu bestimmen und den Roboter anzusteuern, das Kabelende entlang der Zuführrichtung der Kontaktierstelle zuzuführen.

Das optische Abbildungssystem kann dazu eingerichtet sein, eine Lücke zwischen zwei benachbarten Fingern der Seitenwände eines Kabelkanals zu erkennen und die Lücke repräsentierende Positionsdaten an die Steuerung auszugeben, die dazu eingerichtet ist, den Roboter so anzusteuern, dass er mit seinem Greifer ein zumindest einseitig mit einer Komponente verdrahtetes Kabel in die Lücke einführt.

Der Roboter kann weiterhin dazu eingerichtet sein, eine als Kabel ausgebildete Komponente entlang eines Verlegewegs von einer ersten zu einer mit der ersten zu verdrahtenden zweiten Komponente zu verlegen, wobei das optische Abbildungssystem dazu eingerichtet ist, entlang des Verlegewegs ein mögliches Hindernis zu erkennen und bei einem erkannten Hindernis eine entsprechende Information an die Steuerung auszugeben, welche dazu eingerichtet ist, den Greifer dazu anzusteuern, eine eine Kollision mit dem Hindernis vermeidende Ausgleichsbewegung auszuführen.

Das optische Abbildungssystem kann für die Erfassung der Ausrichtung der Montageplatte in Bezug auf den Roboter dazu eingerichtet sein, Merkmale, beispielsweise Bohrungen, etwa Befestigungsbohrungen für die Komponentenmontage auf der Montageplatte, auf der Montageebene und/oder mindestens eine Kante der Montageplatte zu erkennen.

Die Steuerung kann dazu eingerichtet sein, Maschinendaten für die Einbringung eines Bohrlochbilds in die Montageplatte mit dem Offset zu beaufschlagen und den Roboter anzusteuern, das Bohrlochbild entsprechend der mit dem Offset beaufschlagten Maschinendaten in die Montageplatte einzubringen. Dazu kann der Roboter mit seinem als Greifer ausgebildeten Endeffektor ein entsprechendes Werkzeug von einer Werkzeugabnahmestelle abnehmen und für die Bearbeitung der Montageplatte über die Montageebene der Montageplatte führen. Auch hierbei kann wiederum das optische Abbildungssystem dazu dienen, die exakte Anordnung des von dem Roboter ausgewählten Werkzeugs an der Werkzeugabnahmestelle zu erfassen, um ein präzises Abnehmen des Werkzeugs und damit eine präzise Bearbeitung der Montageplatte durch den Roboter zu erzielen.

Gemäß einem anderen Aspekt wird ein Verfahren für den Betrieb einer Anordnung der zuvor beschriebenen Art vorgeschlagen, das die Schritte aufweist:
- Zuführen einer Montageplatte einem Roboter für die auf die Erstellung einer elektrischen Schaltanlage gerichtete Bearbeitung der Montageplatte, wobei der Roboter über Maschinendaten angesteuert wird, die Positionsdaten für die Anordnung von Komponenten auf einer Montageebene der Montageplatte aufweisen;
- Erfassen einer Ausrichtung der Montageplatte in Bezug auf den Roboter mit dem optischen Abbildungssystem; und
- abhängig von der erfassten Ausrichtung, Versehen der Positionsdaten mit einem die Ausrichtung der Montageplatte in Bezug auf den Roboter repräsentierenden Offset.

Das Verfahren kann weiterhin die Schritte aufweisen:
- Ermitteln einer Ausrichtung eines Kabelendes, vorzugsweise einer Aderendhülse des Kabelendes in Bezug auf einen Greifer des Roboters;
- Bestimmen einer Zuführrichtung des Kabelendes zu einer Kontaktierstelle einer zu verdrahtenden Komponente in Kenntnis der Ausrichtung des Kabelendes in Bezug auf den Greifer; und
- Ansteuern des Roboters, das Kabelende entlang der Zuführrichtung der Kontaktierstelle zuzuführen und ggf. in diese einzuführen.

Es werden somit eine Vorrichtung und ein Verfahren zur automatisierten Verarbeitung elektronischer Komponenten im Schaltanlagenbau beschrieben, wobei mithilfe eines optischen Abbildungssystems eine automatisierte Detektion von Bohrungen, Objekten und Kontaktierstellen auf Montageplatten ermöglicht wird. Dadurch werden insbesondere die Bearbeitung der Montageplatte (Löcher bohren, Gewinde schneiden, Ausschnitte fräsen), die Bestückung und Befestigung von Komponenten auf der Montageplatte (Tragschienen, Kabelkanäle bestücken und befestigen, mit Schrauben oder Nieten), die Verdrahtung (Drähte aufnehmen, das Handhaben und Kontaktieren sowie Verlegen dieser) sowie das Prüfen verbauter Komponenten (Verbindungsprüfung, Messung, usw.) in einem Maße automatisiert, wie dies bei den aus dem Stand der Technik bekannten Anordnungen bisher nicht realisierbar war.

Einzelne Elemente und Komponenten, etwa Bohrungen, elektrische Komponenten, Kabelkanäle, Tragschiene oder Drähte können in Bereitstellungseinheiten sowie auf der Montageplatte geometrisch und/oder bezüglich ihrer Ortskoordinaten erfasst und automatisiert beispielsweise anhand von bestehenden 3D-CAD-Daten analysiert bzw. mit diesen abgeglichen werden, um gegebenenfalls durch Erstellung eines Offset eine Anpassung des Prozesses vornehmen zu können, so dass ein hoher Automatisierungsgrad erreicht wird.

Vorzugsweise wird für die zuvor beschriebene Erkennung eine Stereokamera verwendet, welche mindestens zwei Bilderfassungssensoren bzw. Einzelbildkameras aufweist, die relativ zueinander auf einen überlappenden Erfassungsbereich ausgerichtet sind. Das Stereokamerasystem kann an einem Flansch eines Roboters, beispielsweise am Endeffektor eines Knickarmroboters, befestigt und sowohl auf die Spitze des Endeffektors, beispielsweise auf die Greiferfinger, als auch auf den Hintergrund der Finger mit einem Erfassungsbereich von beispielsweise 120 x 120 mm ausgerichtet sein. Für die Realisierung der Stereokamera können Monokameras verwendet werden, welche über einen Befestigungsrahmen zueinander ausgerichtet und in die Gesamteinheit des Endeffektors integriert sind, beispielsweise indem die Monokameras seitlich am multifunktionalen Greifer befestigt sind.

Zur Auswertung der erfassten Bilder kann das Stereokamerasystem signaltechnisch mit einer externen Auswertungseinheit gekoppelt sein, die die Auswertung der Bilder in Echtzeit (On-line) umsetzt. Alternativ kann die Auswertung lokal über die Steuerung der Anordnung realisiert sein. Die Auswerteeinheit bzw. die Steuerung kann einen Auswertealgorithmus zur Bildverarbeitung aufweisen, beispielsweise einen Auswertealgorithmus zur automatischen Erfassung und vorzugsweise auch Identifizierung von Objekten und Kontaktierstellen im Erfassungsbereich.

Im Stand der Technik weist der Wertschöpfungsprozess des Schalt- und Steuerungsanlagenbau im Wesentlichen die folgenden Arbeitsstationen auf:
- in einem 1. Schritt wird die Montageplatte im Wareneingang aus dem Schaltschrankgehäuse ausgebaut und separiert für die Weiterverarbeitung bereitgestellt;
- in einem 2. Schritt findet die Bearbeitung der Montageplatte statt;
- in einem 3. Schritt werden die Tragschienen und Kabelkanäle konfektioniert oder vorkonfektioniert bereitgestellt;
- in einem 4. Schritt werden die Tragschienen und Kabelkanäle auf der Montageplatte montiert;
- in einem 5. Schritt erfolgt die Bestückung der Tragschienen mit elektrischen Komponenten;
- in einem 6. Schritt erfolgt die Verdrahtung der elektrischen Komponenten;
- in einem letzten Schritt wird die Montageplatte in das Schaltschrankgehäuse wieder eingebaut und gegebenenfalls eine Überprüfung der Schaltanlage durchgeführt, beispielsweise eine elektrische Kontaktprüfung.

Soweit die zuvor genannten Prozessschritte, insbesondere die Bearbeitung, die Bestückung, die Verdrahtung und die Prüfung vollautomatisch durchgeführt werden sollen, kann es erforderlich sein, dass vor dem jeweiligen Prozessschritt eine Erfassung der Ausgangslage stattfindet, insbesondere eine Erfassung der Koordinaten und Positionsdaten der vorgefundenen Komponenten, insbesondere der Montageplatte.

Dies bedeutet, dass für die Bearbeitung der Montageplatte die Montageplatte referenziert bzw. ihre Position und Orientierung in Bezug auf den Roboter ermittelt werden kann. Dies kann vorzugsweise durch die Detektion von Befestigungsbohrungen auf der Montageplatte und/oder über eine Kantenerkennung der Montageplatte erfolgen.

Für den Prozessschritt der Bestückung der Montageplatte mit Komponenten kann die Erfassung der Ausgangslage aufweisen, dass zum einen die bereitgestellten Bauteile wie Tragschiene, Kabelkanäle, Befestigungsmittel und Befestigungswerkzeuge, elektrische Komponenten und dergleichen an ihrem Bereitstellungsort erfasst werden, und zum anderen (gegebenenfalls ein weiteres Mal) die Montageplatte in Bezug auf den Roboter referenziert. Dadurch können die exakte Position und Orientierung der Montageplatte ermittelt bzw. gegebenenfalls die Positionen für Bohrungen und Ausbrüche, welche in die Montageplatte eingebracht werden sollen, daraus abgeleitet werden.

Für den Prozessschritt der Verdrahtung kann die Erfassung der Ausgangslage mindestens einen der folgenden Schritte aufweisen:
- Referenzieren der Montageplatte, insbesondere zur Bestimmung der Orientierung und Position der Montageplatte in Bezug auf den Roboter;
- Ermitteln der Positionsdaten und gegebenenfalls Ausrichtung der auf der Montageplatte bereits bestückten Baugruppen anhand von physischen Merkmalen der Komponenten, was beispielsweise im Rahmen eines 2D-oder 3D-Objekt-Matching durchgeführt werden kann;

- Ermitteln der Kontaktierstellen aus den bekannten Positionsdaten der auf der Montageplatte bestückten Komponenten;
- Damit der Verdrahtungsprozess gestartet werden kann, kann in einem weiteren Schritt die Orientierung der Aderendhülse zwischen den Greiferfingern ermittelt, gegebenenfalls eine Nachkorrektur durch den Roboter umgesetzt und in einem folgenden Schritt das erste Drahtende kontaktiert werden.
- Nach der Kontaktierung des ersten Drahtendes werden im weiteren Prozessverlauf für das Hinunterdrücken/Fixieren des Drahtes im Kabelkanal die Lücken zwischen benachbarten Kabelkanalfingern erkannt und der Draht gezielt dort platziert bzw. zwischen den Kabelfingern in die Lücke heruntergedrückt.
- Weiterhin können entlang des weiteren Verlegevorgangs etwaige Hindernisse wie Drahtschlaufen entlang des Verlegewegs erkannt und eine Ausgleichsbewegung durch den Roboter durchgeführt werden.
- Für die Kontaktierung des zweiten Drahtendes kann analog zu dem ersten Drahtende die Orientierung der Aderendhülse zwischen den Greiferfingern ermittelt, gegebenenfalls eine Nachkorrektur durch den Roboter umgesetzt und in einem folgenden Schritt das zweite Drahtende kontaktiert werden.

Die für den Auswertealgorithmus erforderlichen Daten können direkt aus einem 3D-ECAD-System in Form einer Textdatei und gegebenenfalls einer zugehörigen 3D-CAD-Datei bereitgestellt werden.

Die für die Aufnahmen mit dem optischen Abbildungssystem gegebenenfalls erforderlichen Bewegungen werden vorzugsweise mithilfe eines Knickarmroboters umgesetzt. Bestmöglich sind diese Aufnahmen vorzugsweise in die Bewegungsabläufe und Einzelschritte der durchzuführenden und oben beschriebenen Prozesse (Bearbeitung der Montageplatte, Bestückung der Montageplatte sowie Befestigung der Komponenten auf der Montageplatte, Verdrahtung, Prüfen der Schaltanlge, ...) integriert und erfordern somit keine zusätzlichen Bewegungsabläufe.

Weitere Einzelheiten der Erfindungen anhand der nachstehenden Figuren erläutert. Dabei zeigt:
- Figur 1: eine Anordnung gemäß dem Stand der Technik;
- Figur 2: eine beispielhafte Ausführungsform eines Greifers.

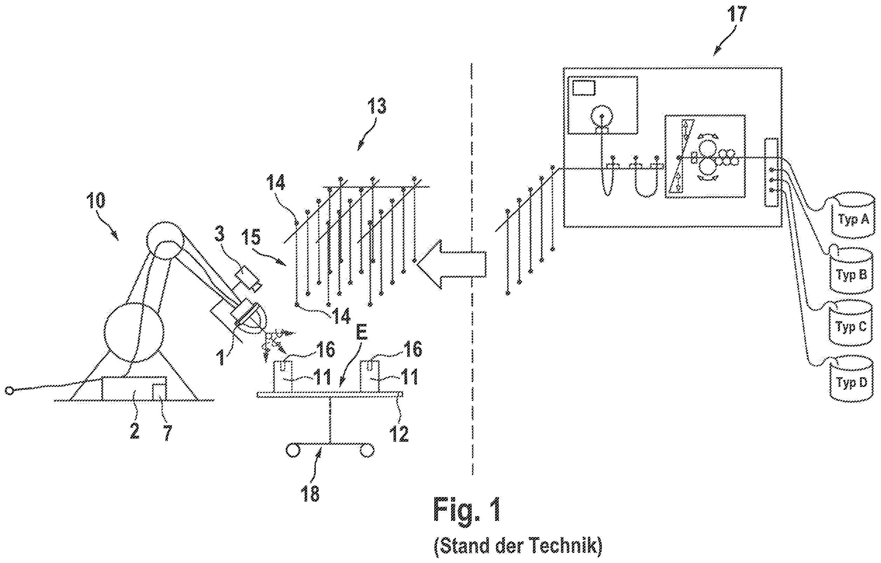

Die Figur 1 zeigt eine aus dem Stand der Technik bekannte Anordnung für die Bestückung und Verdrahtung von elektrischen Komponenten 11 einer auf einer Montageplatte 12 auszubildenden elektrischen Schaltanlage. Die Montageplatte 12 ist von einem Transportwagen 18 horizontal ausgerichtet gehalten, sodass über einen Knickarmroboter 10 mit einem Greifer 1 von oben auf die Komponenten 11 zwecks Kabelzuführung, Kontaktierung und gegebenenfalls Qualitätssicherung zugegriffen werden kann. Der Greifer 1 befindet sich im Sichtfeld eines optischen Abbildungssystems 3, welches als eine Monokamera ausgebildet ist.

Mit dem Knickarmroboter 10, bzw. mit seinem Greifer 1 können von einer Übergabeschnittstelle 13 vorkonfektionierte Kabel 15 abgenommen und den Komponenten 11 zwecks Kontaktierung zugeführt werden. Die vorkonfektionierten Kabel 15 können mithilfe eines Kabelkonfektionierungsautomaten 17 hergestellt werden, wie dies grundsätzlich aus dem Stand der Technik bekannt ist.

Für die Verdrahtung kann der Roboter 10 mit seinem Greifer 1 ein erstes der vorkonfektionierten Kabel 15 von der Schnittstelle 13 abnehmen, indem er das Kabel 15 an einen seiner gegenüberliegenden vorkonfektionierten Kabelenden 14 greift. Das Kabelende 14 kann beispielsweise eine Aderendhülse aufweisen. Daraufhin wird das Kabelende 14 einer ersten Kontaktierungsstelle 16 einer ersten elektrischen Komponente 11 zugeführt und an dieser kontaktiert. Nachdem das erste Kabelende 14 an der 1. Kontaktierungsstelle 16 kontaktiert worden ist, wird das Kabel 15 von der 1. Kontaktierungsstelle 16 zu der zweiten Kontaktierungsstelle 16 einer zweiten elektrischen Komponente 11 der elektrischen Schaltanlage verlegt und das zweite Kabelende 14 an der zweiten elektrischen Kontaktierungsstelle 16 kontaktiert.

Problematisch ist dabei, dass das Kabel 15 ein biegeschlafes Bauteil ist, welches während des Kontaktierungsvorgangs und des Verlegens des Kabels 15 derart manövriert werden muss, dass sich das Kabel 15 nicht mit den elektrischen Komponenten 11 der elektrischen Schaltanlage oder weiteren Aufbauten auf der Montageplatte 12 verheddert. Zur Erzielung einer hohen Prozesssicherheit ist daher eine präzise Führung des Kabels 15 über den gesamten Prozessablauf von dem Abnehmen des Kabels 15 von der Schnittstelle 13 bis zum Kontaktieren des zweiten Kabelendes 14 an der zweiten Kontaktierungsstelle 16 der zweiten Komponente 11 erforderlich.

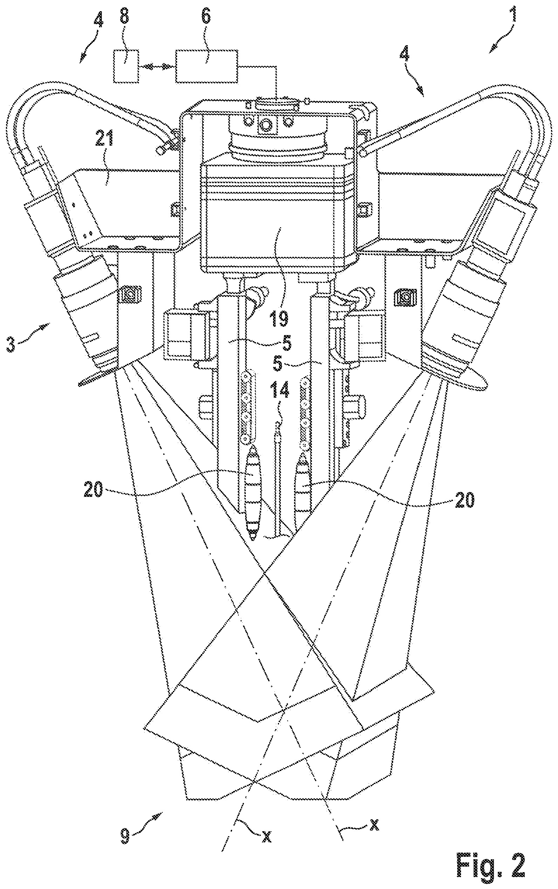

Zur Lösung dieser Problematik kann ein Greifer 1 verwendet werden, wie er beispielhaft in Figur 2 gezeigt ist. Der Greifer 1 weist einen ersten und einen zweiten Greiferfinger 5 auf, die über eine Linearstelleinheit 19 ausschließlich linear zueinander verstellbar sind, derart, dass sie ihren Abstand senkrecht zu ihrer Längsrichtung zueinander variieren. Zwischen den Greiferfingern 5 ist ein Aufnahmebereich ausgebildet, der durch komplementäre Greifbacken 20 an gegenüberliegenden Seiten der Greiferfinger 5 begrenzt ist. Weitere Einzelheiten zu der Kinematik des Greifers 1 sind in der DE 10 2019 106 710 A1 beschrieben.

Erfindungsgemäß weist der Greifer 1 nunmehr ein optisches Abbildungssystem 3 auf, welches dazu eingerichtet ist, eine Ausrichtung der Montageplatte 12 (siehe Figur 1) in Bezug auf den Roboter 10 zu erfassen, wobei die Steuerung 2 des Roboters 10 dazu eingerichtet ist, abhängig von der erfassten Ausrichtung die Positionsdaten für die Anordnung von Komponenten 11, 15 auf der Montageebene der Montageplatte 12 mit einem die Ausrichtung der Montageplatte 12 in Bezug auf den Roboter 10 repräsentierenden Offset zu versehen.

Das optische Abbildungssystem 3 ist als eine Stereokamera 4 bestehend aus zwei Monokameras ausgebildet, deren beide optische Achsen x unter einem spitzen Winkel zu dem Greifer 1 und zueinander angeordnet sind. Die Monokameras können aus dem Stand der Technik bekannte Kameras sein, die vorliegend über einen Befestigungsrahmen 21 zueinander ausgerichtet sind. Dabei sind die Monokameras vorliegend seitlich in der Flucht des multifunktionalen Greifers 1 angeordnet.

Die beiden optischen Achsen x und die beiden Längsachsen der beiden Greiferfinger 5 des Greifers 1 sind in derselben Ebene oder in zwei parallelen Ebenen angeordnet.

Das optische Abbildungssystem 3 weist eine Komponentenerkennung 6 auf, die dazu eingerichtet ist, eine an der Komponentenzufuhr 13 bereitgestellte oder auf der Montageplatte 12 montierte Komponente 11, 15 anhand ihrer mit dem optischen Abbildungssystem 3 aufgenommenen geometrischen Abmessungen und durch Abgleich dieser mit in einem Speicher 7 der Steuerung 2 hinterlegten Referenzabmessungen, die einer bestimmten Komponente 11, 15 oder einem bestimmten Komponententyp zugeordnet sind, zu identifizieren. Dabei kann die Komponentenerkennung 6 dazu eingerichtet sein für eine erkannte Komponente 11, 15 die erkannte Komponente 11, 15 betreffende physische Komponentendaten aus einer Datenbank 8 zu beziehen und aus den Komponentendaten Positionsdaten für mindestens eine Kontaktierungsstelle 16 der die physischen Komponentendaten betreffende Komponente 11, 15 zu ermitteln.

### Bezugszeichenliste:

- 1: Greifer
- 2: Steuerung
- 3: optisches Abbildungssystem
- 4: Stereokamera
- 5: Greiferfinger
- 6: Komponentenerkennung
- 7: Speicher
- 8: Datenbank
- 9: Distales Greiferende
- 10: Roboter
- 11: Elektrische Komponente
- 12: Montageplatte
- 13: Kabelübergabeschnittstelle
- 14: Kabelende
- 15: Kabel
- 16: Kontaktstelle
- 17: Kabelkonfektionierungsautomat
- 18: Transportwagen
- 19: Linearstelleinheit
- 20: Greiferbacke
- 21: Befestigungsrahmen

## Patentansprüche

1. Anordnung für die Bestückung und Verdrahtung elektronischer Komponenten (11, 15) im Schaltanlagenbau, wobei die Anordnung einen Roboter (10) mit einem als Greifer (1) ausgebildeten Endeffektor, eine Montageplattenhaltevorrichtung (18), mit der eine Montageplatte (12) in Bezug auf den Roboter (10) in einer Montageposition gehalten ist, und eine Komponentenzufuhr (13) im Zugriffsbereich des Roboters (10), über die auf der Montageplatte (12) zu montierende Komponenten (11, 15) für die Abnahme durch den Roboter (10) bereitgestellt sind, aufweist, wobei eine Steuerung (2) des Roboters (10) Maschinendaten zur Ansteuerung des Roboters (10) einschließlich Positionsdaten für die Anordnung von Komponenten (11, 15) auf einer Montageebene (E) einer zu bestückenden Montageplatte (12) aufweist, wobei der Roboter (10) ein optisches Abbildungssystem (3) aufweist, das dazu eingerichtet ist, eine Ausrichtung einer Montageplatte (12) in Bezug auf den Roboter (10) zu erfassen, wobei die Steuerung (2) des Roboters (10) dazu eingerichtet ist, abhängig von der erfassten Ausrichtung die Positionsdaten mit einem die Ausrichtung der Montageplatte (12) in Bezug auf den Roboter (10) repräsentierenden Offset zu versehen, **dadurch gekennzeichnet, dass** das optische Abbildungssystem (3) eine Stereokamera (4) aufweist, deren beide optische Achsen (x) unter einem spitzen Winkel zu dem Greifer (1) angeordnet sind, wobei ein distales Greiferende (9) im Abbildungsbereich des optischen Abbildungssystems (3) liegt und das optische Abbildungssystems (3) dazu eingerichtet ist, eine Ausrichtung eines Kabelendes (14), vorzugsweise einer Aderendhülse des Kabelendes (14), in Bezug auf den Greifer (1) zu ermitteln.

2. Anordnung nach Anspruch 1, bei der der Greifer (1) zwei parallel zueinander ausgerichtete Greiferfinger (5) aufweist, die senkrecht zueinander verstellbar sind, wobei die beiden optischen Achsen (x) und die beiden Längsachsen der beiden Greiferfinger (5) in derselben Ebene oder in zwei parallelen Ebenen liegen.

3. Anordnung nach einem der vorangegangen Ansprüche, bei der das optische Abbildungssystem (3) für die Bestimmung der Ausrichtung der Montageplatte (12) in Bezug auf den Roboter (10) dazu eingerichtet ist, ein 2- oder 3-dimensionales Bild der ein Bohrlochbild aufweisenden Montageebene (E) der Montageplatte (12) aufzunehmen und das aufgenommene Lochbild durch eine Transformation, vorzugsweise eine Koordinatentransformation, in ein in den Maschinendaten hinterlegtes Referenzlochbild der Montageplatte (12) zu überführen, wobei durch die Transformation der Offset bestimmt ist.

4. Anordnung nach einem der vorangegangen Ansprüche, bei der das optische Abbildungssystem (3) eine Komponentenerkennung (6) aufweist, die dazu eingerichtet ist, eine an der Komponentenzufuhr (13) bereitgestellte oder auf der Montageplatte (12) montierte Komponente (11, 15) anhand ihrer mit dem optischen Abbildungssystem (3) aufgenommen geometrischen Abmessung und durch Abgleich dieser mit in einem Speicher (7) der Steuerung (2) hinterlegten Referenzabmessungen, die einer bestimmten Komponente (11, 15) oder einem bestimmten Komponententyp zugeordnet sind, zu identifizieren.

5. Anordnung nach Anspruch 4, bei der die Komponentenerkennung (6) dazu eingerichtet ist, für eine erkannte Komponente (11, 15) die erkannte Komponente (11, 15) betreffende physische Komponentendaten aus einer Datenbank (8) zu beziehen und aus den Komponentendaten Positionsdaten für mindestens eine Kontaktierstelle (16) der die physischen Komponentendaten betreffende Komponente (11, 15) zu ermitteln.

6. Anordnung nach Anspruch 5, bei der die Steuerung (2) dazu eingerichtet ist, die Positionsdaten der mindestens einen Kontaktierstelle (16) mit in den Maschinendaten hinterlegten Sollvorgaben für die Positionsdaten der mindestens einen Kontaktierstelle (16) abzugleichen und bei einer ermittelten Abweichung die Maschinendaten mit einem die Abweichung kompensierenden Offset zu versehen.

7. Anordnung nach Anspruch 1, bei der die Steuerung (2) dazu eingerichtet ist, in Kenntnis der Ausrichtung des Kabelendes (14) in Bezug auf den Greifer (1) eine Zuführrichtung des Kabelendes (14) zu einer Kontaktierstelle (16) einer zu verdrahtenden Komponente (11, 15) zu bestimmen und den Roboter (10) anzusteuern, das Kabelende (14) entlang der Zuführrichtung der Kontaktierstelle (16) zuzuführen.

8. Anordnung nach einem der vorangegangen Ansprüche, bei der das optische Abbildungssystem (3) dazu eingerichtet ist, eine Lücke zwischen zwei benachbarten Fingern der Seitenwände eines Kabelkanals zu erkennen und die Lücke repräsentierende Positionsdaten an die Steuerung (2) auszugeben, die dazu eingerichtet ist, den Roboter (10) so anzusteuern, dass er mit seinem Greifer (1) ein zumindest einseitig mit einer Komponente (11, 15) verdrahtetes Kabel in die Lücke einführt.

9. Anordnung nach einem der vorangegangen Ansprüche, bei der der Roboter (10) dazu eingerichtet ist, eine als Kabel ausgebildete Komponente (15) entlang eines Verlegewegs von einer ersten zu einer mit der ersten zu verdrahtenden zweiten Komponente (11) zu verlegen, wobei das optische Abbildungssystem (3) dazu eingerichtet ist, entlang des Verlegewegs ein mögliches Hindernis zu erkennen und bei einem erkannten Hindernis eine entsprechende Information an die Steuerung (2) auszugeben, welche dazu eingerichtet ist, den Greifer (1) bzw. den Roboter (10) dazu anzusteuern, eine eine Kollision mit dem Hindernis vermeidende Ausgleichsbewegung auszuführen.

10. Anordnung nach einem der vorangegangenen Ansprüche, bei der das optische Abbildungssystem (3) für die Erfassung der Ausrichtung der Montageplatte (12) in Bezug auf den Roboter (10) dazu eingerichtet ist, Merkmale, vorzugsweise Bohrungen wie Befestigungsbohrungen, auf der Montagebene (E) und/oder mindestens eine Kante der Montageplatte (12) zu erkennen.

11. Anordnung nach einem der vorangegangenen Ansprüche, bei der die Steuerung (2) dazu eingerichtet ist, Maschinendaten für die Einbringung eines Bohrlochbilds in die Montageplatte (12) mit dem Offset zu beaufschlagen und den Roboter (10) ansteuern, das Bohrlochbild entsprechend der mit dem Offset beaufschlagten Maschinendaten in die Montageplatte (12) einzubringen.

12. Verfahren für den Betrieb einer Anordnung nach einem der vorangegangenen Ansprüche, wobei das Verfahren die Schritte aufweist:
- Zuführen einer Montageplatte (12) einem Roboter (10) für die auf die Erstellung einer elektrischen Schaltanlage gerichtete Bearbeitung der Montageplatte (12), wobei der Roboter (10) über Maschinendaten angesteuert wird, die Positionsdaten für die Anordnung von Komponenten (11, 15) auf einer Montageebene (E) der Montageplatte (12) aufweisen;
- Erfassen einer Ausrichtung der Montageplatte (12) in Bezug auf den Roboter (10) mit dem optischen Abbildungssystem (3); und
- abhängig von der erfassten Ausrichtung Versehen der Positionsdaten mit einem die Ausrichtung der Montageplatte (12) in Bezug auf den Roboter (10) repräsentierenden Offset.
- Ermitteln einer Ausrichtung eines Kabelendes (14), vorzugsweise einer Aderendhülse des Kabelendes (14), in Bezug auf einen Greifer (1) des Roboters (10);
- Bestimmen einer Zuführrichtung des Kabelendes (14) zu einer Kontaktierstelle (16) einer zu verdrahtenden Komponente (11, 15) in Kenntnis der Ausrichtung des Kabelendes (14) in Bezug auf den Greifer (1); und
- Ansteuern des Roboters (10), das Kabelende (14) entlang der Zuführrichtung der Kontaktierstelle (16) zuzuführen.

## Claims

1. Arrangement for fitting and wiring electronic components (11, 15) in switchgear engineering, wherein the arrangement has a robot (10) with an end effector in the form of a gripper (1), a mounting plate holding device (18) with which a mounting plate (12) is held in a mounting position in relation to the robot (10), and a component feed (13) in the access region of the robot (10), via which components (11, 15) to be mounted on the mounting plate (12) are provided for removal by the robot (10), wherein a controller (2) of the robot (10) has machine data for controlling the robot (10), including position data for the arrangement of components (11, 15) on a mounting plane (E) of a mounting plate (12) to be fitted, wherein the robot (10) has an optical imaging system (3) which is configured to detect an alignment of a mounting plate (12) in relation to the robot (10), wherein the controller (2) of the robot (10) is configured to provide the position data with an offset representing the alignment of the mounting plate (12) in relation to the robot (10) depending on the detected alignment, **characterized in that** the optical imaging system (3) has a stereo camera (4), the two optical axes (x) of which are arranged at an acute angle to the gripper (1), wherein a distal gripper end (9) lies in the imaging region of the optical imaging system (3) and the optical imaging system (3) is configured to determine an alignment of a cable end (14), preferably a core end sleeve of the cable end (14), in relation to the gripper (1).

2. Arrangement according to claim 1, in which the gripper (1) has two gripper fingers (5) which are aligned parallel to one another and which are adjustable perpendicularly to one another, wherein the two optical axes (x) and the two longitudinal axes of the two gripper fingers (5) lie in the same plane or in two parallel planes.

3. Arrangement according to one of the preceding claims, in which, in order to determine the alignment of the mounting plate (12) with respect to the robot (10), the optical imaging system (3) is configured to record a 2- or 3-dimensional image of the mounting plane (E) of the mounting plate (12), said mounting plane having a hole hole image, and to convert the recorded hole image by a transformation, preferably a coordinate transformation, into a reference hole image of the mounting plate (12), said reference hole image being stored in the machine data, wherein the offset is determined by the transformation.

4. Arrangement according to one of the preceding claims, in which the optical imaging system (3) has a component recognition system (6) which is configured to identify a component (11, 15) which is provided at the component feed (13) or is mounted on the mounting plate (12), on the basis of its geometric dimension recorded by the optical imaging system (3) and by comparing said geometric dimension with reference dimensions which are stored in a memory (7) of the controller (2) and which are assigned to a specific component (11, 15) or a specific component type.

5. Arrangement according to claim 4, in which the component recognition system (6) is configured to obtain physical component data relating to the recognized component (11, 15) from a database (8) for a recognized component (11, 15) and to determine position data for at least one contact point (16) of the component (11, 15) relating to the physical component data from the component data.

6. Arrangement according to claim 5, in which the controller (2) is configured to compare the position data of the at least one contact point (16) with setpoint specifications stored in the machine data for the position data of the at least one contact point (16) and, in the event of a determined deviation, to provide the machine data with an offset which compensates for the deviation.

7. Arrangement according to claim 1, in which the controller (2) is configured, with knowledge of the alignment of the cable end (14) with respect to the gripper (1), to determine a feed direction of the cable end (14) to a contact point (16) of a component (11, 15) to be wired and to control the robot (10) to feed the cable end (14) along the feed direction to the contact point (16).

8. Arrangement according to one of the preceding claims, in which the optical imaging system (3) is configured to detect a gap between two adjacent fingers of the side walls of a cable channel and to output position data representing the gap to the controller (2) which is configured to control the robot (10) such that it introduces, with its gripper (1), a cable which is wired at least on one side to a component (11, 15) into the gap.

9. Arrangement according to one of the preceding claims, in which the robot (10) is configured to lay a component (15) in the form of a cable along a laying path from a first component (11) to a second component (11) to be wired to the first, wherein the optical imaging system (3) is configured to detect a possible obstacle along the laying path and, if an obstacle is detected, to output corresponding information to the controller (2) which is configured to control the gripper (1) or the robot (10) to execute a compensating movement which avoids a collision with the obstacle.

10. Arrangement according to one of the preceding claims, in which, in order to detect the alignment of the mounting plate (12) with respect to the robot (10), the optical imaging system (3) is configured to detect features, preferably bores such as fastening bores, on the mounting plane (E) and/or at least one edge of the mounting plate (12).

11. Arrangement according to one of the preceding claims, in which the controller (2) is configured to apply the offset to machine data for introducing a hole hole image into the mounting plate (12) and to control the robot (10) to introduce the hole hole image into the mounting plate (12) in accordance with the machine data to which the offset is applied.

12. Method for operating an arrangement according to one of the preceding claims, wherein the method has the steps:
- feeding a mounting plate (12) to a robot (10) for processing the mounting plate (12), said processing being directed to the production of an electrical switchgear assembly, wherein the robot (10) is controlled via machine data which have position data for the arrangement of components (11, 15) on a mounting plane (E) of the mounting plate (12);
- detecting an alignment of the mounting plate (12) in relation to the robot (10) with the optical imaging system (3); and
- depending on the detected alignment, providing the position data with an offset which represents the alignment of the mounting plate (12) in relation to the robot (10).
- determining an alignment of a cable end (14), preferably a core end sleeve of the cable end (14), in relation to a gripper (1) of the robot (10);
- determining a feed direction of the cable end (14) to a contact point (16) of a component (11, 15) to be wired with knowledge of the alignment of the cable end (14) in relation to the gripper (1); and
- controlling the robot (10) to feed the cable end (14) along the feed direction to the contact point (16).

## Revendications

1. Dispositif pour l'équipement et le câblage de composants électroniques (11, 15) dans la construction d'installations de commutation, dans lequel le dispositif comprend un robot (10) avec un effecteur d'extrémité conçu comme une pince (1), un dispositif de maintien de plaque de montage (18), avec lequel une plaque de montage (12) est maintenue dans une position de montage par rapport au robot (10), et une alimentation en composants (13) à portée du robot (10), par l'intermédiaire de laquelle les composants (11, 15) à monter que la plaque de montage (12) sont mis à disposition afin d'être prélevés par le robot (10), dans lequel une commande (2) du robot (10) contient des données de machine pour le contrôle du robot (10), y compris des données de position pour la disposition des composants (11, 15) sur un plan de montage (E) d'une plaque de montage (12) à équiper, dans lequel le robot (10) comprend un système de représentation optique (3) qui est conçu pour mesurer une orientation d'une plaque de montage (12) par rapport au robot (10), dans lequel la commande (2) du robot (10) est conçue pour munir, en fonction de l'orientation mesurée, les données de position avec un offset représentant l'orientation de la plaque de montage (12) par rapport au robot (10), **caractérisé en ce que** le système de représentation optique (3) comprend une caméra stéréoscopique (4) dont les deux axes optiques (x) sont disposés avec un angle aigu par rapport à la pince (1), dans lequel une extrémité de pince distale (9) se trouve dans la zone de représentation du système de représentation optique (3) et le système de représentation optique (3) est conçu pour déterminer une orientation d'une extrémité de câble (14), de préférence d'un manchon d'extrémité de fil de l'extrémité de câble (14), par rapport à la pince (1).

2. Dispositif selon la revendication 1, dans lequel la pince (1) comprend deux doigts de pince (5) orientés parallèlement entre eux, qui sont réglables de manière perpendiculaire entre eux, dans lequel les deux axes optiques (x) et les deux axes longitudinaux des deux doigts de pince (5) se trouvent dans le même plan ou dans deux plans parallèles.

3. Dispositif selon l'une des revendications précédentes, dans lequel le système de représentation optique (3) pour la détermination de l'orientation de la plaque de montage (12) par rapport au robot (10) est conçu pour enregistrer une image à 2 dimensions ou à 3 dimensions du plan de montage (E) comprenant un gabarit de perçage de la plaque de montage (12) et pour convertir le gabarit de perçage enregistré, à l'aide d'une transformation, de préférence une transformation de coordonnées, en un gabarit de perçage de référence, enregistré dans les données de machine, de la plaque de montage (12), dans lequel l'offset est déterminé à l'aide de la transformation.

4. Dispositif selon l'une des revendications précédentes, dans lequel le système de représentation optique (3) comprend une détection de composants (6), qui est conçue pour identifier un composant (11, 15) mis à disposition au niveau de l'alimentation en composants (13) ou monté sur la plaque de montage (12) à l'aide de ses dimensions géométriques enregistrées avec le système de représentation optique (3) et grâce à une comparaison de celles-ci avec des dimensions de référence enregistrées dans une mémoire (7) de la commande (2), qui correspondent à un composant (11, 15) déterminé ou à un type de composant déterminé.

5. Dispositif selon la revendication 4, dans lequel la détection de composants (6) est conçue pour extraire, pour un composant (11, 15) détecté, des données physiques de composants concernant le composant (11, 15) détecté, dans une base de données (8) et pour déterminer, à partir des données de composant, des données de position pour au moins un point de contact (16) du composant (11, 15) correspondant aux données physiques de composant.

6. Dispositif selon la revendication 5, dans lequel la commande (2) est conçue pour comparer les données de position de l'au moins un point de contact (16) avec des valeurs de consigne, enregistrées dans les données de machine, pour les données de position de l'au moins un point de contact (16) et, si un écart est constaté, pour munir les données de machine d'un offset compensant cet écart.

7. Dispositif selon la revendication 1, dans lequel la commande (2) est conçue pour déterminer, en connaissant l'orientation de l'extrémité de câble (14) par rapport à la pince (1), une direction de déplacement de l'extrémité de câble (14) vers un point de contact (16) d'un composant (11, 12) à câbler et pour contrôler le robot (10) afin d'amener l'extrémité de câble (14) le long de la direction de déplacement vers le point de contact (16).

8. Dispositif selon l'une des revendications précédentes, dans lequel le système de représentation optique (3) est conçu pour détecter un trou entre deux doigts adjacents des parois latérales d'un canal de câble et pour envoyer les données de position représentant ce trou à la commande (2), qui est conçue pour contrôler le robot (10) de façon à introduire, avec sa pince (1) un câble, équipé au moins d'un côté avec un composant (11, 15), dans le trou.

9. Dispositif selon l'une des revendications précédentes, dans lequel le robot (10) est conçu pour poser un composant (15) conçu comme un câble le long d'un chemin de pose d'un premier composant vers un deuxième composant (11) à câbler, dans lequel le système de représentation optique (3) est conçu pour détecter, le long du chemin de pose, un obstacle possible et, si un obstacle est détecté, pour envoyer une information correspondante à la commande (2) qui est conçue pour contrôler la pince (1) ou le robot (10) de façon à effectuer un mouvement de compensation permettant d'éviter l'obstacle.

10. Dispositif selon l'une des revendications précédentes, dans lequel le système de représentation optique (3) pour la mesure de l'orientation de la plaque de montage (12) par rapport au robot (10) est conçu pour détecter des caractéristiques, de préférence des perçages comme des perçages de fixation, sur le plan de montage (E) et/ou au moins une arête de la plaque de montage (12).

11. Dispositif selon l'une des revendications précédentes, dans lequel la commande (2) est conçue pour munir les données de machine pour l'introduction d'un gabarit de perçage dans la plaque de montage (12) avec l'offset et pour contrôler le robot (10) afin d'introduire le gabarit de perçage, en fonction des données de machine munies de l'offset, dans la plaque de montage (12).

12. Procédé de fonctionnement d'un dispositif selon l'une des revendications précédentes, dans lequel le procédé comprend les étapes suivantes :
- déplacement d'une plaque de montage (12) vers un robot (10) pour le traitement de la plaque de montage (12) visant la réalisation d'une installation de commutation électrique, dans lequel le robot (10) est contrôlé par l'intermédiaire de données de machine qui contiennent des données de position pour la disposition de composants (11, 15) sur un plan de montage (E) de la plaque de montage (12) ;
- mesure d'une orientation de la plaque de montage (12) par rapport au robot (10) avec le système de représentation optique (3) ; et
- en fonction de l'orientation mesurée, ajout, aux données de position, d'un offset représentant l'orientation de la plaque de montage (12) par rapport au robot (10) ;
- détermination d'une orientation d'une extrémité de câble (14), de préférence d'un manchon d'extrémité de fil de l'extrémité de câble (14), par rapport à une pince (1) du robot (10) ;
- détermination d'une direction de déplacement de l'extrémité de câble (14) vers un point de contact (16) d'un composant (11, 15) à câbler en connaissant l'orientation de l'extrémité de câble (14) par rapport à la pince (1) ; et
- contrôle du robot (10) afin de déplacer l'extrémité de câble (14) le long de la direction de déplacement vers le point de contact (16).
